Europäisches Patentamt

**European Patent Office**

**Office européen des brevets**

(19)

(11) Numéro de publication : **0 032 347**
**B1**

(12) FASCICULE DE BREVET EUROPÉEN

(45) Date de publication du fascicule du brevet :
05.06.85

(51) Int. Cl.⁴ : **G 21 C   9/00**

(21) Numéro de dépôt : **80401880.2**

(22) Date de dépôt : **29.12.80**

(54) **Dispositif d'aspersion automatique de l'enceinte de confinement d'un réacteur à eau pressurisée.**

(30) Priorité : 15.01.80 FR 8000843

(43) Date de publication de la demande :
22.07.81 Bulletin 81/29

(45) Mention de la délivrance du brevet :
05.06.85 Bulletin 85/23

(84) Etats contractants désignés :
BE CH DE GB IT LI NL SE

(56) Documents cités :
DE-A- 1 915 371
FR-A- 1 477 135
FR-A- 2 274 120
US-A- 3 168 445
US-A- 3 566 904
US-A- 3 718 539

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Fajeau, Maurice**
**512, Chemin du Saint Sépulcre**
**F-84120 Pertuis (FR)**

(74) Mandataire : **Mongrédien, André et al**
**c/o BREVATOME 25, rue de Ponthieu**
**F-75008 Paris (FR)**

EP 0 032 347 B1

## Description

La présente invention concerne un dispositif passif permettant de pulvériser automatiquement un liquide tel que de l'eau contenant éventuellement des additifs chimiques dans l'enceinte de confinement d'un réacteur à eau pressurisée lorsque la pression dans l'enceinte atteint une valeur donnée.

Dans le cas d'un accident par rupture du circuit primaire ou par rupture d'une tuyauterie de vapeur à l'intérieur de l'enceinte de confinement du réacteur, la pression et la température dans l'enceinte ont tendance à monter et de l'iode peut être libérée.

Afin de maintenir constamment la pression et la température dans l'enceinte en dessous d'une certaine valeur et de rabattre l'iode éventuellement libérée, on prévoit généralement des systèmes de secours qui se composent de circuits d'aspersion comportant des pompes reliées au réseau électrique secouru. Cependant, ces systèmes connus présentent différents inconvénients. Tout d'abord, il s'agit de systèmes actifs dont la mise en œuvre est conditionnée par le fonctionnement d'éléments commandés électriquement tels que des pompes et des électrovannes. De plus, ces systèmes impliquent des délais de mise en route importants, généralement de l'ordre de 100 secondes après le déclenchement du signal d'aspersion.

Par ailleurs, on connaît du document FR.A. 1 477 135 une installation dans laquelle le bâtiment d'un réacteur nucléaire communique avec un bâtiment sous vide à l'extrémité supérieure duquel est disposé un système d'aspersion déclenché par une augmentation de pression dans le bâtiment sous vide résultant de l'ouverture de soupapes isolant normalement ce bâtiment du bâtiment réacteur.

La présente invention a pour objet un dispositif d'aspersion de l'enceinte de confinement d'un réacteur à eau pressurisée ne présentant pas les inconvénients des dispositifs antérieurs et assurant notamment une aspersion automatique et instantanée de l'enceinte, sans que cette aspersion ne soit conditionnée par le fonctionnement d'une électrovanne, d'une pompe ou d'un circuit électrique d'alimentation, en raison du caractère entièrement passif de ce dispositif.

A cet effet et conformément à l'invention, il est proposé un dispositif d'aspersion automatique de l'enceinte de confinement d'un réacteur à eau pressurisée lorsque la pression dans l'enceinte atteint une valeur maximale donnée, ce dispositif comprenant un réservoir principal sensible à la pression régnant dans l'enceinte et un réservoir auxiliaire de plus petit volume, les deux réservoirs étant remplis de liquide d'aspersion de telle sorte que le niveau du liquide dans le réservoir auxiliaire est inférieur à celui du liquide dans le réservoir principal, un tube reliant le réservoir auxiliaire à une rampe de buses d'aspersion, située à l'intérieur de l'enceinte de confinement, caractérisé en ce que le réservoir auxiliaire est également sensible à la pression régnant dans l'enceinte, les deux réservoirs étant reliés par un premier tube en U renversé formant siphon, le tube reliant le réservoir auxiliaire à la rampe de buses d'aspersion étant un second tube en U renversé formant siphon dont le coude est disposé au-dessus du niveau du réservoir auxiliaire, la rampe de buses d'aspersion étant située en dessous du fond du réservoir auxiliaire.

Grâce au dispositif d'aspersion dont les caractéristiques essentielles viennent d'être énoncées, lorsque la pression s'élève à l'intérieur de l'enceinte de confinement en raison d'un accident par rupture du circuit primaire ou par rupture d'une tuyauterie de vapeur à l'intérieur de cette enceinte, le siphon formé par le premier tube en U renversé est amorcé automatiquement dès que la pression dans l'enceinte dépasse une valeur donnée. L'eau contenue dans le réservoir principal se déverse alors dans le réservoir auxiliaire jusqu'à ce que le niveau de ce dernier vienne à la hauteur du coude formé par le second tube en U renversé. Cette élévation du niveau du liquide dans le réservoir auxiliaire est très rapide en raison du faible volume de ce réservoir. Le siphon formé par le second tube en U est alors amorcé à son tour et l'eau contenue dans le réservoir auxiliaire est pulvérisée à l'intérieur de l'enceinte par la rampe de buses d'aspersion. Le dispositif selon l'invention est donc entièrement passif et automatique et la pulvérisation par les buses d'aspersion intervient dans un délai très court.

Dans un mode de réalisation préféré de l'invention, ce dispositif comprend une bâche fermée définissant le réservoir principal et le réservoir auxiliaire est reçu à l'intérieur de cette bâche, par exemple contre la paroi. Le niveau normal du liquide dans le réservoir principal peut alors être déterminé par la hauteur des parois du réservoir auxiliaire.

Conformément à une caractéristique secondaire de l'invention, le réservoir auxiliaire communique avec un circuit de mise à niveau muni d'au moins une vanne normalement fermée et dont l'ouverture permet de fixer le niveau de liquide dans le réservoir auxiliaire.

De préférence, le premier tube en U est relié à un circuit d'éventage permettant, lors du remplissage initial, d'être sûr du niveau d'eau dans les deux branches du tube.

Dans une première variante de l'invention, la section de la branche du premier tube en U disposée dans le réservoir auxiliaire est supérieure à la section de l'autre branche de ce tube.

Dans une seconde variante de l'invention, on dispose sur le circuit d'éventage du premier tube en U un volume tampon.

L'augmentation de diamètre de la branche du tube en U disposée dans le réservoir auxiliaire ou l'existence d'un volume tampon sur la branche d'éventage permettent de limiter l'augmentation de la pression du volume d'air emprisonné dans le tube lorsque le liquide monte dans la branche du tube qui débouche dans le réservoir principal, ce qui permet, à même pression d'amorçage, d'augmenter la différence de hauteur entre le sommet du tube en U et le niveau d'eau dans le premier réservoir.

Selon encore une autre caractéristique secondaire de l'invention, le dispositif comprend un circuit d'alimentation en liquide débouchant dans le réservoir principal et muni d'au moins une vanne normalement fermée. L'arrivée dans le réservoir de l'eau d'alimentation se fait alors de préférence par l'intermédiaire d'un tube ouvert dans l'enceinte en partie supérieure, permettant ainsi l'équilibrage de la pression entre l'enceinte et la bâche, ce tube étant terminé par un coude en partie inférieure de façon à retenir un bouchon d'eau isolant les atmosphères de l'enceinte et de la bâche et évitant toute évaporation de l'eau de la bâche. Un circuit normal d'aspersion par pompes peut être branché sur la tuyauterie d'alimentation en aval de la vanne.

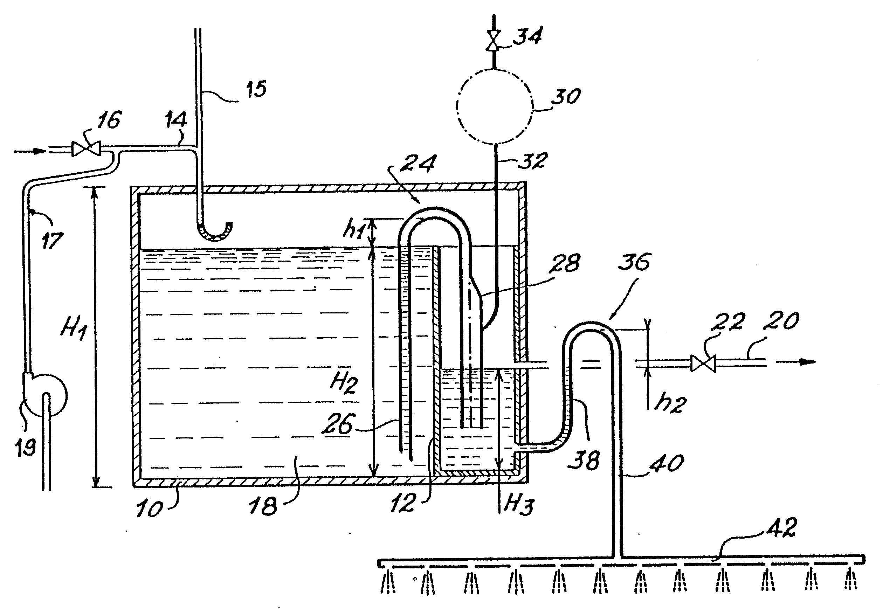

On décrira maintenant, à titre d'exemple non limitatif, un mode de réalisation particulier de l'invention en se référant au dessin annexé dans lequel la figure unique représente de façon schématique un dispositif d'aspersion automatique de l'enceinte de confinement d'un réacteur à eau pressurisée réalisé conformément aux enseignements de la présente invention.

Le dispositif représenté sur la figure unique est disposé entièrement à l'intérieur de l'enceinte de confinement (non représentée) d'un réacteur nucléaire à eau pressurisée. Il comprend une bâche fermée 10, de hauteur $H_1$, dans laquelle est disposé, de préférence contre la paroi de la bâche 10, un petit réservoir auxiliaire 12 dont la hauteur $H_2$ est inférieure à la hauteur $H_1$ de la bâche 10.. Le volume du petit réservoir 12 est très petit par rapport au volume du réservoir principal 18 défini par la bâche 10 en dehors du petit réservoir 12.

Un circuit d'alimentation 14 débouche au-dessus du réservoir principal 18 par l'intermédiaire d'un tube 15 en forme de J ouvert à son extrémité supérieure et terminé par un coude à son extrémité inférieure qui débouche dans le réservoir 18, de façon à retenir un bouchon d'eau isolant les atmosphères de l'enceinte et de la bâche et assurant l'équilibrage des pressions en évitant toute évaporation de l'eau contenue dans la bâche. Le circuit 14 comprend au moins une vanne 16 permettant de remplir le réservoir 18 d'eau contenant éventuellement des additifs chimiques. En raison de la hauteur limitée $H_2$ des parois latérales du réservoir 12, le circuit d'alimentation 14 permet également de remplir par trop-plein le réservoir auxiliaire 12 lorsque le niveau de l'eau contenue dans le réservoir principal 18 arrive en haut des parois latérales du réservoir 12.

Un circuit d'aspersion classique 17 comprenant au moins une pompe 19 peut être branché de façon avantageuse sur le circuit 14 en aval de la vanne 16.

Un circuit de mise à niveau 20 débouchant à son niveau le plus haut dans le réservoir auxiliaire 12 et comprenant au moins une vanne 22 permet de limiter le niveau dans le réservoir auxiliaire à une hauteur $H_3$ inférieure à la hauteur $H_2$ de l'eau dans le réservoir principal.

Pour éviter tout amorçage intempestif de l'aspersion, le remplissage, c'est-à-dire l'ouverture de la vanne 16 est en principe empêché tant que la vanne 22 n'est pas complètement ouverte.

Un premier tube en U renversé et formant siphon 24 est disposé à cheval sur la paroi latérale du réservoir 12 de façon à plonger par une branche 26 dans le réservoir principal et par une branche 28 dans le réservoir auxiliaire. Le coude du tube 24 est placé à une distance $h_1$ au-dessus de la surface de l'eau dans le réservoir principal 18.

Le coude du tube 24 est en communication avec un circuit d'éventage 32 contrôlé par une vanne 34 qui est ouverte un bref instant afin d'équilibrer les pressions à la fin du remplissage.

S'il est nécessaire d'accroître la garde $h_1$ pour une pression d'amorçage du siphon donnée, on peut augmenter le volume d'air entre les deux niveaux du premier siphon, soit en élargissant la section de la branche 28 qui plonge dans le réservoir 12 comme on l'a représenté en traits pleins sur la figure, soit en plaçant un volume tampon 30 sur le circuit d'éventage 32 comme on l'a représenté en traits mixtes sur la figure.

Bien que les deux variantes de réalisation qui viennent d'être décrites soient représentées simultanément sur la figure unique, on comprendra qu'elles constituent deux alternatives de réalisation qui sont normalement choisies indépendamment l'une de l'autre.

Le dispositif d'aspersion selon l'invention comprend également un second tube en U renversé formant siphon 36 dont une première branche 38 communique avec le réservoir auxiliaire 12 à la partie inférieure de ce dernier et dont la seconde branche 40 communique avec une rampe de buses d'aspersion 42. De plus, le coude du tube en U 36 est situé à une distance $h_2$ au-dessus du niveau de l'eau dans le réservoir auxiliaire 12, ce niveau étant déterminé par le circuit de mise à niveau 20.

Le dispositif d'aspersion automatique que l'on vient de décrire en se référant à la figure unique fonctionne de la façon suivante.

Comme il a été décrit précédemment, le réservoir principal 18 et le réservoir auxiliaire 12 sont normalement remplis par le circuit d'alimentation 14 à des niveaux déterminés respectivement par la hauteur des parois latérales du réservoir auxiliaire 12 et par la hauteur de l'embouchure du circuit 20 dans le réservoir 12, les vannes 16 et 22 étant ouvertes simultanément au cours du remplissage. A la fin du remplissage, la vanne 34 est elle aussi ouverte un bref instant pour équilibrer les pressions entre la bâche et le volume d'air du premier siphon.

Lors du fonctionnement normal du réacteur,

les vannes 16, 22 et 34 sont fermées. Le réservoir principal 18 et le réservoir auxiliaire 12 sont remplis comme l'illustre la figure, et les siphons formés par les tubes en U renversés 24 et 36 sont désamorcés. La pression régnant à l'intérieur de l'enceinte de confinement est appliquée à l'eau contenue dans les réservoirs par l'intermédiaire du tube en J 15. Compte-tenu du bouchon d'eau formé dans l'extrémité du tube 15, elle peut différer très légèrement de la pression régnant à l'intérieur de la bâche.

Lorsqu'un accident par rupture d'un circuit primaire ou par rupture d'une tuyauterie de vapeur à l'intérieur de l'enceinte de confinement du réacteur se produit, la pression à l'intérieur de l'enceinte tend à augmenter. L'ensemble du dispositif d'aspersion selon l'invention étant placé à l'intérieur de l'enceinte, cette augmentation de pression chasse le bouchon d'eau du tube 15 et s'applique à la surface libre de l'eau dans le réservoir principal 18 et dans le réservoir auxiliaire 12. Il en résulte une montée de l'eau dans les branches 26 et 28 du tube en U 24. Cette montée est d'autant plus rapide que l'on augmente le volume d'air contenu dans la branche 28, soit par élargissement de la section de la branche 28, soit par mise en communication de cette branche avec un volume tampon 30, l'une et l'autre de ces caractéristiques permettant de diminuer l'influence de la montée de l'eau dans les branches 26 et 28 sur l'augmentation de la pression de l'air dans le siphon 24.

Lorsque l'augmentation de pression à l'intérieur de l'enceinte est suffisante pour atteindre la pression d'amorçage du siphon 24, l'eau contenue dans le réservoir principal 18 se déverse automatiquement par le tube 24 dans le réservoir auxiliaire 12. Il en résulte une augmentation du niveau de l'eau dans le réservoir 12 qui conduit rapidement à faire monter l'eau dans la branche 38 du tube en U 36 au-dessus du coude de ce dernier. Le siphon défini par le tube 36 se trouve ainsi amorcé et l'eau du réservoir auxiliaire se déverse par la rampe de buses d'aspersion 42 à l'intérieur de l'enceinte de confinement pour condenser la vapeur formée et abaisser la pression dans l'enceinte.

Le dispositif d'aspersion selon l'invention est donc mis en route automatiquement et l'augmentation de la pression dans l'enceinte reste limitée sans qu'il soit nécessaire de déclencher une électrovanne ou une pompe dont le fonctionnement est toujours conditionné par la défaillance éventuelle de leurs circuits de commande. Ce dispositif d'aspersion est donc entièrement passif et ne présente pas les inconvénients des dispositifs de la technique antérieure remplissant des fonctions similaires.

On remarquera enfin que le réservoir principal défini dans la bâche 10 peut être réalimenté à n'importe quel moment au moyen de pompes à partir de la recirculation des drains accumulés dans le puisard de l'enceinte pour constituer une partie du circuit d'aspersion de type classique 17.

Bien entendu, l'invention n'est pas limitée au mode de réalisation qui vient d'être décrit à titre d'exemple, mais en couvre toutes les variantes. Ainsi, la disposition du réservoir principal et du réservoir auxiliaire à l'intérieur d'une bâche unique n'est pas indispensable à l'invention et on comprendra que ces deux réservoirs peuvent être constitués par deux cuves distinctes et de préférence voisines, le remplissage de la cuve auxiliaire ne s'effectuant plus alors par trop-plein ou encore au travers d'une tuyauterie de liaison.

## Revendications

1. Dispositif d'aspersion automatique de l'enceinte de confinement d'un réacteur à eau pressurisée lorsque la pression dans l'enceinte atteint une valeur donnée, ce dispositif comprenant un réservoir principal (18) sensible à la pression régnant dans l'enceinte et un réservoir auxiliaire (12) de plus petit volume, les deux réservoirs étant remplis de liquide d'aspersion de telle sorte que le niveau du liquide dans le réservoir auxiliaire (12) est inférieur à celui du liquide dans le réservoir principal (18), un tube (36) reliant le réservoir auxiliaire (12) à une rampe de buses d'aspersion (42), située à l'intérieur de l'enceinte de confinement, caractérisé en ce que le réservoir auxiliaire (12) est également sensible à la pression régnant dans l'enceinte, les deux réservoirs étant reliés par une premier tube en U renversé formant siphon (24), le tube (36) reliant le réservoir auxiliaire (12) à la rampe de buses d'aspersion (42) étant un second tube en U renversé formant siphon (36), dont le coude est disposé au-dessus du niveau du réservoir auxiliaire (12), la rampe de buses d'aspersion (42) étant située en dessous du fond du réservoir auxiliaire (12).

2. Dispositif selon la revendication 1, caractérisé en ce qu'il comprend une bâche (10) définissant le réservoir principal (18), le réservoir auxiliaire (12) étant reçu à l'intérieur de ladite bâche (10).

3. Dispositif selon la revendication 2, caractérisé en ce que le réservoir auxiliaire est disposé contre la paroi de la bâche.

4. Dispositif selon l'une quelconque des revendications 2 ou 3, caractérisé en ce que le niveau normal du liquide dans le réservoir principal (18) est déterminé par la hauteur des parois du réservoir auxiliaire (12).

5. Dispositif selon l'une quelconque des revendications précédentes, caractérisé en ce que le réservoir auxiliaire (12) communique avec un circuit de mise à niveau (20) muni d'au moins une vanne (22) normalement fermée et dont l'ouverture permet de fixer le niveau de liquide dans le réservoir auxiliaire (12).

6. Dispositif selon l'une quelconque des revendications précédentes, caractérisé en ce que le premier tube en U (24) communique avec un circuit d'éventage (32) contrôlé par au moins une vanne (34).

7. Dispositif selon l'une quelconque des revendications précédentes, caractérisé en ce que la section de la branche (28) du premier tube en U (24) disposée dans le réservoir auxiliaire (12) est supérieure à la section de l'autre branche (26) de ce tube.

8. Dispositif selon la revendication 6, caractérisé en ce que la branche (28) du premier tube en U (24) disposée dans le réservoir auxiliaire (12) communique avec un volume tampon (30) disposé dans le circuit d'éventage (32).

9. Dispositif selon l'une quelconque des revendications précédentes, caractérisé en ce qu'il comprend un circuit d'alimentation en liquide (14) débouchant dans le réservoir principal (18) et muni d'au moins une vanne (16) normalement fermée.

10 Dispositif selon la revendication 9, caractérisé en ce que le circuit d'alimentation en liquide (14) débouche dans le réservoir principal (18) par l'extrémité recourbée d'un tube en forme de J (15) dont l'autre extrémité débouche à l'intérieur de l'enceinte de confinement, l'extrémité recourbée du tube (15) étant normalement remplie de liquide d'aspersion.

11. Dispositif selon l'une quelconque des revendications 9 ou 10, caractérisé en ce qu'un circuit classique d'aspersion (17) communique avec le circuit d'alimentation en liquide (14) en aval de la vanne (16).

12. Dispositif selon l'une quelconque des revendications précédentes, caractérisé en ce qu'il est placé en totalité à l'intérieur de l'enceinte de confinement.

## Claims

1. Automatic sprinkling device for the confinement of a pressurized water reactor operating, when the pressure within the confinement reaches a predetermined value, said device comprising a main reservoir (18) sensitive to the pressure within the confinement and an auxiliary reservoir (12) of smaller volume, the two reservoirs being filled with sprinkling liquid whereby the liquid level in the auxiliary reservoir (12) is lower than the liquid level in the main reservoir (18), a tube (36) connecting the auxiliary reservoir (12) to a bank of sprinkling nozzles (42), located within the confinement, characterized in that the auxiliary reservoir (12) is also sensitive to the pressure in the confinement, the two reservoirs being connected by a first inverted U-tube forming a siphon (24), the tube (36) connecting the auxiliary reservoir (12) to the bank of sprinkling nozzles (42) being a second inverted U-tube forming a siphon (36) whose elbow is located above the level of the auxiliary reservoir (12), the bank of sprinkling nozzles (42) being located below the bottom of the auxiliary reservoir (12).

2. Device according to Claim 1, characterized in that it comprises a tank (10) defining the main reservoir (18), the auxiliary reservoir (12) being located within the said tank (10).

3. Device according to Claim 2, characterized in that the auxiliary reservoir is located against the wall of the tank.

4. Device according to either of Claims 2 and 3, characterized in that the normal level of liquid in the main reservoir (18) is determined by the height of the wall of the auxiliary reservoir (12).

5. Device according to any one of the preceding Claims, characterized in that the auxiliary reservoir (12) communicates with a circuit (20) for controlling the water level having at least one normally closed valve (22) opening of which permits fixing of the liquid level in the auxiliary reservoir (12).

6. Device according to any one of the preceding Claims, characterized in that the first U-tube (24) communicates with a ventilation circuit (32) controlled by at least one valve (34).

7. Device according to any one of the preceding Claims, characterized in that the cross-sectional area of the branch (28) of the first U-tube (24) located in the auxiliary reservoir (12) is greater than that of the other branch (26) of the tube.

8. Device according to Claim 6, characterized in that the branch (28) of the first U-tube (24) located in the auxiliary reservoir (12) is in communication with a buffer volume (30) located in the ventilation circuit (32).

9. Device according to any one of the preceding Claims, characterized in that it comprises a liquid supply circuit (14) opening into the main reservoir (18) and having at least one normally closed valve (16).

10. Device according to Claim 9, characterized in that the liquid supply circuit (14) opens into the main reservoir (18) by the upwardly-curved end of a J-tube (15) whose other end opens into the containment, the upwardly-curved end of the tube (15) being normally filled with sprinkling liquid.

11. Device according to either of Claims 9 and 10, characterized in that a conventional sprinkling circuit (17) communicates with the liquid supply circuit (14) downstream of the valve (16).

12. Device according to any one of the preceding Claims, characterized in that it is completely enclosed within the confinement.

## Patentansprüche

1. Automatische Sprühvorrichtung für den Sicherheitsbehälter eines Druckwasserreaktors, welche bei Erreichen eines vorgegebenen Werts des Drucks im Sicherheitsbehälter in Funktion tritt und einen von dem im Sicherheitsbehälter herrschenden Druck beaufschlagten Hauptbehälter (18) sowie einen ein kleiners Volumen aufweisenden Hilfsbehälter (12) aufweist, und bei welcher die beiden Behälter derart mit einer Sprühflüssigkeit gefüllt sind, daß der Spiegel der Flüssigkeit im Hilfsbehälter (12) niedriger liegt als der Flüssigkeitsspiegel im Hauptbehälter (18), und der Hilfsbehälter (12) über ein Rohr (36) mit einer im Inneren des Sicherheitsbehälters angeordneten, mit Sprühdüsen bestückten Leitung (42) verbunden ist, dadurch gekennzeichnet, daß der Hilfsbehälter (12) ebenfalls von dem im Sicherheitsbehälter herrschenden Druck beaufschlagt ist, daß die beiden Behälter über ein überkopf stehend U-förmiges, einen Siphon darstellendes erstes Rohr (24) miteinander verbunden sind, daß das den Hilfsbehälter (12) mit der mit Sprühdüsen bestückten Leitung (42) verbindende Rohr (36) ein überkopf stehend U-förmiges, einen Siphon darstellendes zweites Rohr (36) ist, dessen Krümmung oberhalb des Flüssigkeitsspiegels im Hilfsbehälter (12) angeordnet ist, und daß die mit Sprühdüsen bestückte Leitung (42) unterhalb des Bodens des Hilfsbehälters (12) angeordnet ist.

2. Vorrichtung nach Anspruch 1, dadurch gekennzeichnet, daß sie einen den Hauptbehälter (18) darstellenden Trog (10) aufweist und daß der Hilfsbehälter (12) im Inneren des Trogs (10) angeordnet ist.

3. Vorrichtung nach Anspruch 2, dadurch gekennzeichnet, daß der Hilfsbehälter an der Wand des Trogs angeordnet ist.

4. Vorrichtung nach einem der Ansprüche 2 oder 3, dadurch gekennzeichnet, daß die normale Höhe des Flüssigkeitsspiegels im Hauptbehälter (18) durch die Höhe der Wände des Hilfsbehälters (12) bestimmt ist.

5. Vorrichtung nach einem der vorstehenden Ansprüche, dadurch gekennzeichnet, daß der Hilfsbehälter (12) mit einer Leitung (20) zum Einstellen des Flüssigkeitsspiegels verbunden ist, welche ein normalerwesie geschlossenes Absperrorgan (22) enthält, welches zum Einstellen des Flüssigkeitsspiegels im Hilfsbehälter (12) öffnend betätigbar ist.

6. Vorrichtung nach einem der vorstehenden Ansprüche, dadurch gekennzeichnet, daß das erste U-förmige Rohr (24) mit einer Entlüftungsleitung (32) verbunden ist, welche durch wenigstens ein Absperrorgan (34) gesteuert ist.

7. Vorrichtung nach einem der vorstehenden Ansprüche, dadurch gekennzeichnet, daß der Querschnitt des im Hilfsbehälter (12) angeordneten Schenkels (28) des ersten U-förmigen Rohrs (24) größer ist als der Querschnitt des anderen Schenkels (26) dieses Rohrs.

8. Vorrichtung nach Anspruch 6, dadurch gekennzeichnet, daß der im Hilfsbehälter (12) angeordnete Schenkel (28) des ersten U-förmigen Rohrs (24) mit einem in der Entlüftungsleitung (32) angeordneten Dämpfungsvolumen (30) strömungsverbunden ist.

9. Vorrichtung nach einem der vorstehenden Ansprüche, dadurch gekennzeichnet, daß sie eine Flüssigkeits-Zufuhrleitung (14) aufweist, welche im Hauptbehälter (18) ausmündet und wenigstens ein im Normalzustand geschlossenes Absperrorgan (16) enthält.

10. Vorrichtung nach Anspruch 9, dadurch gekennzeichnet, daß die Flussigkeitszufuhrleitung (14) über ein J-förmig gekrümmtes Ende eines Rohrs (15) im Hauptbehälter (18) ausmündet, daß das andere Ende des gekrümmten Rohrs (15) im Inneren des Sicherheitsbehälters ausmündet und daß das gekrümmte Ende des Rohrs (15) im Normalzustand mit Sprühflüssigkeit gefüllt ist.

11. Vorrichtung nach einem der Ansprüche 9 oder 10, dadurch gekennzeichnet, daß an der Abströmseite des Absperrorgans (16) eine herkömmliche Sprühleitungsanordnung (17) mit der Flüssigkeitszufuhrleitung (14) strömungsverbunden ist.

12. Vorrichtung nach einem der vorstehenden Ansprüche, dadurch gekennzeichnet, daß sie in ihrer Gesamtheit im Inneren des Sicherheitsbehälters angeordnet ist.

0 032 347